# EUROPÄISCHE PATENTSCHRIFT

(11) **EP 2 946 655 B1**
(45) Veröffentlichungstag und Bekanntmachung des Hinweises auf die Patenterteilung: **13.12.2017**
(21) Anmeldenummer: 15405025.6
(22) Anmeldetag: 30.03.2015
(51) Int. Cl.: A01G 9/02

(54) **VORRICHTUNG ZUR VERTIKALEN BEGRÜNUNG**
DEVICE FOR VERTICAL GREENING
DISPOSITIF DE GAZONNAGE VERTICAL

(30) Priorität: 19.05.2014 CH 7582014
(43) Veröffentlichungstag der Anmeldung: 25.11.2015
(73) Patentinhaber: Trösch, Christian, 8192 Glattfelden (CH)
(72) Erfinder: Trösch, Christian, 8192 Glattfelden (CH)
(74) Vertreter: Spillmann, Hannes

(56) Entgegenhaltungen:
- EP-A1- 2 335 473
- WO-A1-2011/095570
- DE-U1-202011 109 100
- FR-A1- 2 967 331
- GB-A- 2 430 856

## Beschreibung

### Technisches Gebiet

Die vorliegende Erfindung betrifft eine Vorrichtung zur Begrünung vertikaler Flächen sowie ein Verfahren zur Begrünung einer solchen und die Verwendung einer entsprechenden Vorrichtung gemäss den Oberbegriffen der unabhängigen Ansprüche.

### Stand der Technik

Die wohl älteste Methode, eine vertikale Fläche zu begrünen ist es, eine rankende oder kletternde Pflanze an der Fläche oder einem an der Fläche angebrachten Gerüst emporklettern zu lassen. Diese Pflanzen wurzeln in der Regel auf dem Boden direkt an, oder in unmittelbarer Nähe zur zu begrünenden Fläche. Die Wahl der zu diesem Zweck geeigneten Pflanzen ist allerdings beschränkt. Auch lässt sich der Bewuchs nur sehr indirekt steuern, indem die Pflanze beschnitten wird. Ausserdem sind gerade an Flächen hochkletternde Pflanzen dafür bekannt, die bewachsene Fläche in Mitleidenschaft bis hin zur Beschädigung zu ziehen.

Aus diesem Grund wurden Systeme entwickelt, welche sowohl für den Innen- als auch Aussenbereich Möglichkeiten bieten, mit einer vergleichsweise breiten Palette an geeigneten Pflanzen vertikale Flächen zu begrünen. Besonders geeignet sind Pflanzen, die selbst ohne einen Bodengrund und mit einem Habitus, der auf den Bewuchs von höher gelegenen Stellen ausgelegt ist, wie ihn zum Beispiel Epiphyten aufweisen. Will man nun aber auch konventionell am Boden oder mit Substrat wurzelnde Pflanzen einsetzen, so müssen Systeme geschaffen werden, die Substrat lagern können. Bringt man an vertikalen Flächen aber solche Pflanztöpfe an, so ergeben sich Probleme in der gleichmässigen Verteilung der Feuchtigkeit. Häufig beobachtet man an vertikalen Bepflanzungen, dass die oben gepflanzten Pflanzen kümmern und zu trocken sind, während die unten gepflanzten Pflanzen unter zu viel Wasser ebenfalls suboptimal gedeihen.

In der WO 2012/084065 A1 wird ein Paneelsystem vorgestellt, welches über horizontal eingeschobene Pflanzgefässe an einer Profilstruktur das Bepflanzen vertikaler Ebenen gestattet. Die einzelnen Paneele haben ein Reservoir und einen Pflanzkübel zur Aufnahme des Substrats. Das horizontale Hinausschieben der Paneele zur Bepflanzung oder zur Pflege der Pflanzen ist allerdings verhältnismässig aufwendig.

Die DE 20 2011 109 100 U1 zeigt ebenfalls ein vertikales Pflanzsystem. Zu diesem Zweck werden in diesem Dokument Speicherkassetten mittels Haltern an Wänden aufgehängt. Diese Speicherkassetten sind mit Öffnungen versehen, in welche einzelne Pflanzgefässe ohne Befestigungsmaterial eingeschoben und befestigt werden können. Dieses Dokument befasst sich allerdings nicht mit dem Problem der Bewässerung an vertikalen Flächen respektive sie schlägt lediglich ein manuelles oder automatisches Bewässerungssystem vor, sowie den Zusatz eines Wasserspeichers, wie zum Beispiel Moos, um den Feuchtigkeitsgehalt über einen längeren Zeitraum zu gewährleisten.

Die GB 2 430 856 A zeigt ebenfalls ein System, bei dem Pflanzen auf einer vertikalen Fläche gepflanzt werden können. An einem Gerüst werden übereinander Pflanzgefässe so angebracht, dass der Boden des Pflanzgefässes zur vertikalen Fläche hin abgeschrägt ist. Mittels einer Pumpe wird nun Wasser von einem zu unterst vorgesehenen Reservoir bis zur obersten Bepflanzung befördert. In diesem System kann auch ein Überlauf vorgesehen sein, bei dem die einzelnen Reservoirs der Pflanzgefässe sich ab einem gewissen Füllstand in den nächst unteren leeren können. Aus diesem System ist es allerdings unhandlich, die einzelnen Pflanzgefässe zu entnehmen, um die Pflanzen zu pflanzen oder zu pflegen.

Die CH 704 538 A1 offenbart eine modulare Pflanzenwand. Diese Pflanzenwand dient dazu, eine vertikale Fläche zu begrünen. Zu diesem Zweck werden an einer Modulrückwand einzelne Module mit einer Speicherkammer für überschüssiges Wasser gestapelt. Die Module sind so ausgestattet, dass sie ein zu einer Bepflanzungsseite hin offenes Substratfach aufweisen. Die Module werden durch diese Öffnung befüllt und verbleiben an der Modulrückwand. Eine Bepflanzung der Module durch eine Öffnung und an der vertikalen Fläche selbst ist aber umständlich.

Die FR 2 967 331 A1 offenbart zur vertikalen Begrünung Tröge mit Wasserreservoir, in die Pflanzentöpfe eingebracht werden können.

Es besteht somit ein Bedürfnis nach einer Vorrichtung zur Bepflanzung von vertikalen Flächen, die einfach zu bedienen ist und vielseitig eingesetzt werden kann.

Es ist somit eine Aufgabe der vorliegenden Erfindung, eine Vorrichtung zur Begrünung vertikaler Flächen bereitzustellen, welche mindestens einen Nachteil des Bekannten überwindet. Insbesondere soll eine Vorrichtung zur Begrünung vertikaler Flächen bereitgestellt werden, welche einfach zu installieren und in ihrer Herstellung und Wartung kostengünstig ist. Weiter sollen ein entsprechendes Verfahren zur Begrünung vertikaler Flächen und eine Verwendung der erfindungsgemässen Vorrichtung entsprechend bereitgestellt werden.

### Darstellung der Erfindung

Die Aufgabe der vorliegenden Erfindung wird mit einer Vorrichtung gemäss dem kennzeichnenden Teil der unabhängigen Ansprüche gelöst. Weiter wird die Aufgabe durch das entsprechende Verfahren und die konkrete Verwendung der erfindungsgemässen Vorrichtung gelöst.

Ein Aspekt der vorliegenden Erfindung betrifft eine Vorrichtung zur Begrünung vertikaler Flächen. Die Vorrichtung weist eine Vorderseite und eine Rückseite auf. Sie umfasst zudem mindestens ein stapelbares Grundelement mit einem Leervolumen und einem von der Vorderseite zur Rückseite abschüssigen Boden. Die Vorrichtung umfasst zudem mindestens ein Einsatzgefäss mit einem Pflanzvolumen, welches in ein genanntes stapelbares Grundelement einsetzbar ist. Das Einsatzgefäss weist zudem mindestens eine Ausnehmung auf, sodass das Pflanzvolumen mit dem Leervolumen in Fluidverbindung gebracht werden kann. Das mindestens eine Einsatzgefäss und das mindestens eine stapelbare Grundelement umfassen weiter Mittel, um das Einsatzgefäss mit dem Grundelement zu verrasten. Diese Mittel sind so ausgestaltet, dass das Einsatzgefäss mit dem Grundelement entfernbar verbindbar ist. Die Vorrichtung zur Begrünung vertikaler Flächen umfasst weiter mindestens ein Bewässerungsmittel, welches so ausgestaltet ist, dass mittels Kapillareffekt Flüssigkeit vom Leervolumen zum Pflanzvolumen gelangen kann. Insbesondere ist dieses Bewässerungsmittel aus einem geeigneten Stoff oder Material gefertigt. Das Bewässerungsmittel erstreckt sich vom Einsatzgefäss durch mindestens eine der mindestens einen Ausnehmung in das Leervolumen. Vorzugsweise erstreckt sich das Bewässerungsmittel in das Wasserreservoir. Das Bewässerungsmittel erstreckt sich sackartig im Einsatzgefäss, so dass es das Pflanzvolumen im Einsatzgefäss im Wesentlichen umgibt.

In einer besonderen Ausführungsform ist das Bewässerungsmittel aus einem Stoff ausgewählt aus der Gruppe, gebildet aus: Vlies, Wolle, anorganischer Faser (zum Beispiel Mineralwolle, Asbest etc.), organischer Faser (zum Beispiel Viskose, Polyester etc.), pflanzlicher Naturfaser (zum Beispiel Kokosfaser, Palmfaser, Hanffaser, Baumwolle, Bast, Sisal etc.), Keramik, Faserverbundwerkstoff enthaltend einen oder mehrerer der genannten Stoffe, Verbund aus einer Mehrzahl dieser Stoffe.

Im Sinne der vorliegenden Erfindung kann die Begrünung einer vertikalen Fläche sowohl als die Begrünung einer Wandfläche als auch einer freistehenden Fläche im Raum angesehen werden. Aus diesem Kontext ergibt sich auch die Einteilung der Vorrichtung in eine

Vorderseite und in eine Rückseite. Die Vorderseite ist die der begrünten Fläche abgewandte Seite, während die Rückseite die Seite ist, welche der begrünten Fläche näher ist respektive direkt an diese angrenzt. Somit wäre es auch denkbar, zwei erfindungsgemässe Vorrichtungen Rückseite an Rückseite derart aufzustellen, dass sie zusammen eine begrünte Wand bilden mit zwei voneinander abgewandten Vorderseiten.

Im Sinne der vorliegenden Erfindung bedeutet stapelbar, dass zwei oder mehr Elemente übereinander gelagert werden können. In einer besonderen Ausführungsform kann dies spezielle Ausbildungen an den stapelbaren Elementen bedeuten. In einem konkreten Beispiel wäre es möglich, die Kanten der Grundelemente mit einer Nut zu versehen, sodass beim Stapeln ein Flansch in einer Nut zu liegen käme. Auch Stecksysteme, Klemmverschlüsse und/oder Verschraubungen wären denkbar, um die Stapelbarkeit zu unterstützen. In seiner einfachsten Ausführungsform hat das stapelbare Grundelement eine im Wesentlichen rechteckige Grundform. Eine Mehrzahl an stapelbaren Grundelementen kann somit ohne weiteren Aufwand übereinandergestapelt werden.

Im Sinne der vorliegenden Erfindung ist ein Boden eines stapelbaren Grundelements dann abschüssig, wenn der Boden auf der Vorderseite höher ist als auf der Rückseite. Im oben genannten Beispiel eines rechteckigen Kastens würde es bedeuten, dass der Boden des Kastens an einer Vorderseite höher wäre, das heisst der Kasten weniger tief als auf einer Rückseite. Dies kann einfach dadurch bewerkstelligt werden, dass der Boden schräg zur Rückseite abfallend im Kasten ausgebildet wird.

Im Sinne der vorliegenden Erfindung kann ein Einsatzgefäss zum Einsetzen in ein genanntes stapelbares Grundelement beispielsweise dann geeignet sein, wenn das Einsatzgefäss in seinen Ausmassen in das stapelbare Grundelement passt. In einem konkreten Beispiel kann das Einsatzgefäss als rechteckiger Kasten ausgestaltet sein, der, bedingt durch seine Grösse, in das stapelbare Grundelement passt.

Im Sinne der vorliegenden Erfindung besteht eine Fluidverbindung, wenn ein Austausch von Gas und/oder Flüssigkeit zwischen den in Fluidverbindung stehenden Teilen möglich ist.

Mittel, um das Einsatzgefäss mit dem Grundelement zu verrasten, können zum Beispiel Mittel sein, welche geeignet sind, einen Kraftschluss zwischen den genannten Teilen zu ermöglichen. Im Sinne der vorliegenden Erfindung ist ein Verrasten dann bereits gegeben, wenn eine Bewegung der miteinander verrasteten Teile in eine Richtung durch eine Haltekraft verhindert wird. Im Sinne der vorliegenden Erfindung ist eine solche Verbindung entfernbar, wenn zum Beispiel eine Bewegung eines der verbundenen Teile in eine bestimmte Achse die Verrastung löst und somit die Haltekraft aufhebt.

Da sich das Bewässerungsmittel in das Wasserreservoir erstreckt, kann durch seine Eigenschaft, mittels Kapillarkräften Flüssigkeit in vertikaler Richtung zu transportieren, somit Flüssigkeit aus dem Wasserreservoir in das Einsatzgefäss gelangen. Wird das Einsatzgefäss bepflanzt, so können die Pflanzen mithilfe ihres Wurzelwerks über das Bewässerungsmittel auf die Flüssigkeitsreserve des Wasserreservoirs zurückgreifen.

Da sich das Bewässerungsmittel sackartig im Einsatzgefäss erstreckt, kann zum Beispiel das Einsatzgefäss als rechteckiger Kasten ausgestaltet sein, der oben offen ist und auf seiner Rückseite Ausnehmungen aufweist, welche geeignet sind, eine Fluidverbindung zum stapelbaren Grundelement herzustellen. In dieses Einsatzgefäss kann eine im

Wesentlichen dem rechteckigen Kasten entsprechende Matte aus einem Stoff, welcher Kapillarkräfte zulässt, eingeführt werden. Durch die Ausnehmung kann ein Teil dieses Stoffes, welcher sonst das Pflanzvolumen des Einsatzgefässes bis auf die obige Öffnung im Wesentlichen vollständig umgibt, wie eine Lunte in das Wasserreservoir ragen. Wird dieser Sack nun mit Erde befüllt und bepflanzt, kann das Wurzelwerk über die Verbindung des Bewässerungsmittels mit dem Wasserreservoir auf diese Wasserreserven zugreifen.

In einer besonderen Ausführungsform weist das stapelbare Grundelement ein Wasserreservoir im Bereich des von der Vorderseite zur Rückseite abschüssigen Bodens innerhalb des Leervolumens auf. In dieser Ausführungsform bildet ein Teil des Leervolumens das besagte Wasserreservoir. Vorzugsweise entspricht die maximale Grösse des Wasserreservoirs der Schräge des Bodens. Das heisst die Grösse des Wasserreservoirs entspricht einem Volumen, das definiert wird durch eine Rückwand des stapelbaren Grundelements, dem abschüssigen Boden des stapelbaren Grundelements, und einer gedachten Verbindung, welche sich rechtwinklig von der Rückseite des stapelbaren Grundelements bis zur Vorderseite des stapelbaren Grundelements erstreckt.

In einer besonderen Ausführungsform wird das besagte Wasserreservoir durch einen Überlauf begrenzt. Vorzugsweise ist dieser Überlauf an der Vorderseite des von der Vorderseite zur Rückseite abschüssigen Bodens vorgesehen. In dieser besonderen Ausführungsform kann der abschüssige Boden beispielsweise doppelt ausgestaltet sein, das heisst mit zwei parallel verlaufenden abschüssigen Bodenplatten. Ein Spalt zwischen diesen Platten ermöglicht ein Abfliessen des überschüssigen Wassers aus dem Wasserreservoir. Alternativ können Bohrungen oder Ausnehmungen am abschüssigen Boden vorgesehen sein, welche einen Abfluss des überschüssigen Wassers ermöglichen. Im Betrieb, das heisst, wenn eine Mehrzahl stapelbarer Grundelemente übereinandergestapelt sind, würde das überschüssige, durch den Überlauf abfliessende Wasser von einem oberen stapelbaren Grundelement zu einem unteren stapelbaren Grundelement abfliessen. Vorzugsweise sind die stapelbaren Grundelemente identisch ausgebildet. Um die Vorrichtung zur Begrünung vertikaler Flächen zu bewässern, würde es dann ausreichen, den Obersten der stapelbaren Grundelemente mit ausreichend Wasser zu versorgen. Durch die jeweiligen Überläufe würde das überschüssige Wasser jeweils in das nächst untere stapelbare Grundelement abfliessen und sich somit sich auf alle Elemente verteilen.

In einer besonderen Ausführungsform stehen eine Mehrzahl an stapelbaren Grundelementen miteinander in Fluidverbindung. Bevorzugt steht jedes stapelbare Grundelement über einen Überlauf, welcher an der Vorderseite des von der Vorderseite zur Rückseite abschüssigen Bodens vorgesehen ist, miteinander in Fluidverbindung.

In einer besonderen Ausführungsform verfügt das Einsatzgefäss über Haken als Mittel, um das Einsatzgefäss mit dem Grundelement zu verrasten. Analog weist das mindestens eine stapelbare Grundelement entsprechende Stifte auf, die mit den besagten Haken verhakt werden können.

In einer weiteren besonderen Ausführungsform sind diese Haken und Stifte integrale Bestandteile des Einsatzgefässes respektive des stapelbaren Grundelements.

In einer weiteren besonderen Ausführungsform können die Haken die Form von Nasen haben, welche sich aus der rechteckigen Grundform des Einsatzgefässes erstrecken. In einer bevorzugten Ausführungsform weist das Einsatzgefäss Haken auf, sodass zwischen dem Einsatzgefäss und dem stapelbaren Grundelement eine Selbstsperrung entstehen kann, wenn das Einsatzgefäss eingesetzt ist. Diese Selbstsperrung ist durch Zugentlastung lösbar.

In einer besonderen Ausführungsform sind die Einsatzgefässe und die Mittel zum Verrasten derselben mit den Grundelementen so angeordnet, dass die Einsatzgefässe durch die Vorderseite der Vorrichtung entnehmbar und verrastbar sind. In einer weiteren besonderen Ausführungsform sind die Einsatzgefässe als rechteckige Kästen ausgestaltet, welche selbst über eine Vorderseite und eine Rückseite verfügen. Die Rückseite weist Haken auf, mit denen die Einsatzgefässe mit den Grundelementen verrastbar sind. Die Haken sind nach unten geöffnet, sodass, wenn sie in entsprechende Stifte der Grundelemente eingerastet sind, sie durch eine Zugentlastung gen oben lösbar sind. Im normalen Betrieb sind die Einsatzgefässe durch eine Selbstsperrung in den stapelbaren Grundelementen getragen.

In einer besonderen Ausführungsform weist die erfindungsgemässe Vorrichtung zudem eine Pumpe zur Bewässerung der Vorrichtung auf. Die Pumpe, zum Beispiel eine handelsübliche Membranpumpe, kann an einen Wasserkreislauf gekoppelt sein, welcher von einem untersten Wasserreservoir das Wasser stetig in das oberste Wasserreservoir pumpt. Somit entsteht ein Bewässerungskreislauf, der sicherstellt, dass alle stapelbaren Grundelemente zwischen einem zuunterst aufgestellten und einem zuoberst aufgestellten Grundelement ausreichend befeuchtet sind. Als weiteren Vorteil ist durch ein ständiges Fliessen von Wasser über die Überläufe an den Enden der abgeschrägten Böden auch eine Erhöhung der unmittelbaren Luftfeuchtigkeit in der Nähe zu erreichen. Dies hat insbesondere für in Innenräumen platzierte Vorrichtungen gemäss der vorliegenden Erfindung einen weiteren positiven Effekt der Raumbefeuchtung.

Im Sinne der vorliegenden Erfindung ist die Anzahl der Grundelemente, die gestapelt werden können, nicht beschränkt. Es ist möglich, einzelne Wände herzustellen, um zum Beispiel Sichtblenden oder Hecken zu bilden. Auch eine komplette Fassadenbegrünung einer Hauswand ist mit dem erfindungsgemässen System zu bewerkstelligen. In diesem Fall könnten die stapelbaren Grundelemente ausserdem mit der Fassade verschraubt sein.

In einer besonderen Ausführungsform sind sowohl das stapelbare Grundelement als auch das Einsatzgefäss aus einem Kunststoff. Vorzugsweise handelt es sich dabei um einen rezyklierbaren Kunststoff. Alternativ können die Elemente auch aus einem anderen Baustoff sein. Besonders für den Fassadenbau geeignet wären stapelbare Grundelemente aus Aluminium. Die Einsatzgefässe können ebenfalls aus Aluminium bestehen oder aus einem Kunststoff, vorzugsweise einem rezyklierbaren.

In einer besonderen Ausführungsform kann eine Mehrzahl an erfindungsgemässen Vorrichtungen nebeneinander platziert werden, um eine in der Breite grössere Fassade zu begrünen.

Mit der erfindungsgemässen Vorrichtung wird eine Vorrichtung zur Begrünung vertikaler Flächen bereitgestellt, welche einfach zu bedienen ist und die Kultivierung einer Vielzahl von Pflanzen auf vertikalen Flächen ermöglicht. Dadurch, dass die Einsatzgefässe auf der Vorderseite der Vorrichtung entnommen und, von der Vorrichtung getrennt, bepflanzt und gepflegt werden können, kann die Vorrichtung auch sehr sicher betrieben werden. Besonders geeignet ist die Vorrichtung als Wandbegrünung auch für private Nutzer und Laien geeignet. Durch die Entnehmbarkeit der Einsatzgefässe können auch Kinder und Senioren eine vertikale Wandbegrünung vorbereiten.

In einer besonderen Ausführungsform kann die erfindungsgemässe Vorrichtung zudem mit einer Beleuchtung ausgestattet sein. Die Beleuchtung kann zum Beispiel am Grundelement befestigt werden und das jeweils darin verstaute Einsatzgefäss beleuchten, oder sie kann auch eine Reihe von Einsatzgefässen gleichzeitig beleuchten.

Ein weiterer Aspekt der vorliegenden Erfindung betrifft ein Verfahren zur Begrünung einer vertikalen Fläche. Zunächst muss eine oder mehrere der erfindungsgemässen Vorrichtungen bereitgestellt werden. Die Vorrichtung wird an der zu begrünenden vertikalen Fläche so aufgestellt, dass die Vorderseite von der zu begrünenden Fläche abgewandt ist. Insbesondere wird eine Mehrzahl an stapelbaren Grundelementen aufeinander aufgeschichtet. Dies kann sooft wiederholt werden, bis die gewünschte Höhe der vertikalen Begrünung erreicht ist. Anschliessend werden die Einsatzgefässe mit dem Bewässerungsmittel befüllt. Die Einsatzgefässe werden dann mit Erde gefüllt und bepflanzt. Als letzter Schritt werden die Einsatzgefässe in die Grundelemente eingerastet.

Ein weiterer Aspekt der vorliegenden Erfindung betrifft die Verwendung einer erfindungsgemässen Vorrichtung zur Begrünung einer vertikalen Fläche. Dazu wird eine Mehrzahl an stapelbaren Grundelementen an der zu begrünenden Fläche übereinandergestapelt und eine Mehrzahl an Einsatzgefässen mit Pflanzen bepflanzt und dergestalt in die stapelbaren Grundelemente eingeführt, dass sie mit diesen lösbar verrastet sind.

Es versteht sich für einen Fachmann von selbst, dass sämtliche besondere Ausführungsformen, die geschildert wurden, in einer erfindungsgemässen Vorrichtung in beliebiger Kombination miteinander auftreten können, sofern sie sich nicht gegenseitig ausschliessen.

Aus der nachfolgenden Detailbeschreibung und der Gesamtheit der Patentansprüche ergeben sich weitere vorteilhafte Ausführungsformen und Merkmalskombinationen der Erfindung. Im Folgenden wird nun die Erfindung anhand konkreter Beispiele und Zeichnungen näher erläutert, ohne jedoch auf diese eingeschränkt zu sein.

### Kurze Beschreibung der Zeichnungen

Die Figuren zeigen:
- Figur 1: zeigt schematisch ein Element der erfindungsgemässen Vorrichtung;
- Figur 2a: zeigt ein stapelbares Grundelement;
- Figur 2b: zeigt perspektivisch ein stapelbares Grundelement;
- Figur 3a: zeigt ein Einsatzgefäss im Querschnitt, und
- Figur 3b: zeigt perspektivisch ein Einsatzgefäss.

Grundsätzlich sind in den Figuren die gleichen Teile mit den gleichen Bezugszeichen versehen.

### Wege zur Ausführung der Erfindung

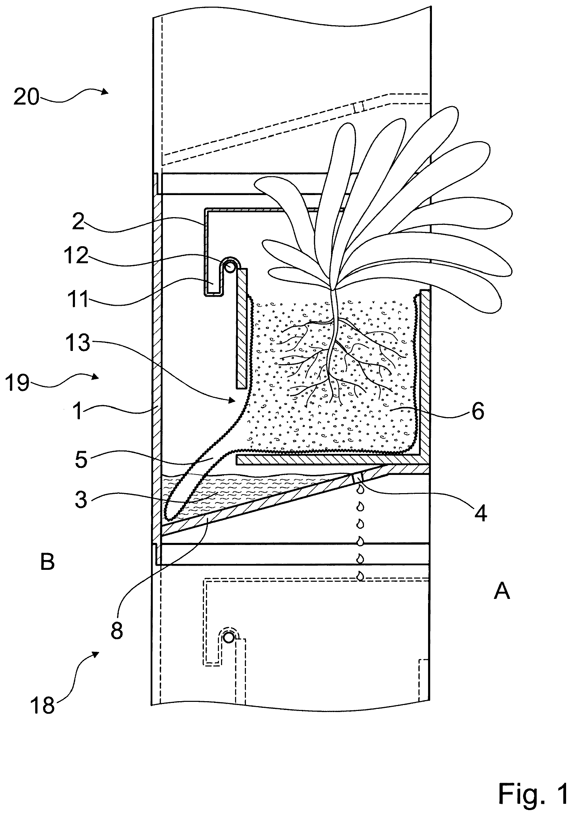

Die Figur 1 zeigt schematisch den Aufbau einer erfindungsgemässen Vorrichtung. Dabei wird ein Ausschnitt mit drei Stapeln 18, 19, 20 einer vertikalen Begrünung dargestellt. Auf einem ersten Stapel 18 ruht ein zweiter Stapel 19, auf welchem wiederum ein dritter Stapel 20 gestapelt ist. Der zweite Stapel 19 ist zu Illustrationszwecken mit einer schematischen Befüllung illustriert. Der zweite Stapel 19 umfasst ein stapelbares Grundelement 1, welches im vorliegenden Beispiel eine rechteckige im Wesentlichen kastenförmige Form hat. Das stapelbare Grundelement 1 besteht im vorliegenden Beispiel aus einem Kunststoff und wurde mit einem Spritzgussverfahren hergestellt. Seine Stapelbarkeit wird dadurch verbessert, dass seine unteren und oberen Kanten jeweils mit einer Nut oder einem Flansch versehen sind, sodass eine Kompatibilität und verbesserte Stapelbarkeit mit dem entsprechenden ersten 18 und dritten stapelbaren Grundelement 20 erreicht wird.

Das stapelbare Grundelement 1 ist zu einer Vorderseite A offen, während es zu einer Rückseite B geschlossen ist. Der Boden 8 des stapelbaren Grundelements 1 ist von vorne A nach hinten B abschüssig ausgestaltet, sodass insgesamt ein Bereich des Leervolumens des stapelbaren Grundelements 1 als Wasserreservoir 3 dienen kann. Durch den abschüssigen Boden 8 entsteht innerhalb des stapelbaren Grundelements 1 eine Senke als Wasserreservoir 3. Der abschüssige Boden 8 ist mit Perforationen 4 versehen, sodass das Wasserreservoir 3 nicht über einen bestimmten Pegel mit Wasser gefüllt sein kann. In der vorliegenden Ausführungsform wird durch die Perforationen 4 eine Fluidverbindung zum nächst unteren Stapel 18 hergestellt. Das überschüssige Wasser, welches durch die Perforation 4 abfliesst, gelangt somit direkt auf ein Einsatzgefäss 2 des nächst unteren Stapels 18 (nicht im Detail gezeigt), welches ansonsten identisch wie der Stapel 19 aufgebaut ist.

Im stapelbaren Grundelement 1 ist ein Einsatzgefäss 2 eingehängt. Das gezeigte Einsatzgefäss 2 besteht im vorliegenden Beispiel ebenfalls aus einem Kunststoff. Es wird mittels auf der Rückseite des Einsatzgefässes 2 ausgebildeter Haken 11 in entsprechend am stapelbaren Grundelement 1 ausgebildete Stifte 12 so eingehängt, dass eine Selbstsperrung entsteht, welche durch Zugentlastung lösbar ist. Somit kann mit einer einfachen Bewegung durch die offene Vorderseite A das Einsatzgefäss 2 aus dem stapelbaren Grundelement 1 entnommen respektive eingesetzt werden. An der Rückseite des Einsatzgefässes 2 ist zudem eine Ausnehmung vorgesehen, durch welche das Bewässerungsmittel, im vorliegenden Fall ein Gewebe aus Kokosfasern, sich in das Wasserreservoir 3 des stapelbaren Grundelements 1 erstrecken kann. Durch die Kokosfaser als Bewässerungsmittel 5 kann mittels Kapillarkräften Flüssigkeit aus dem Wasserreservoir 3 zum Pflanzvolumen des Einsatzgefässes 2 aufsteigen. Das Einsatzgefäss 2 ist im vorliegenden Beispiel in seinem Pflanzvolumen mit einem Substrat 6 befüllt und derart bepflanzt, dass die Pflanze vorne A aus der Vorrichtung respektive durch eine zweite vorderseitige Ausnehmung des Einsatzgefässes 2 wächst.

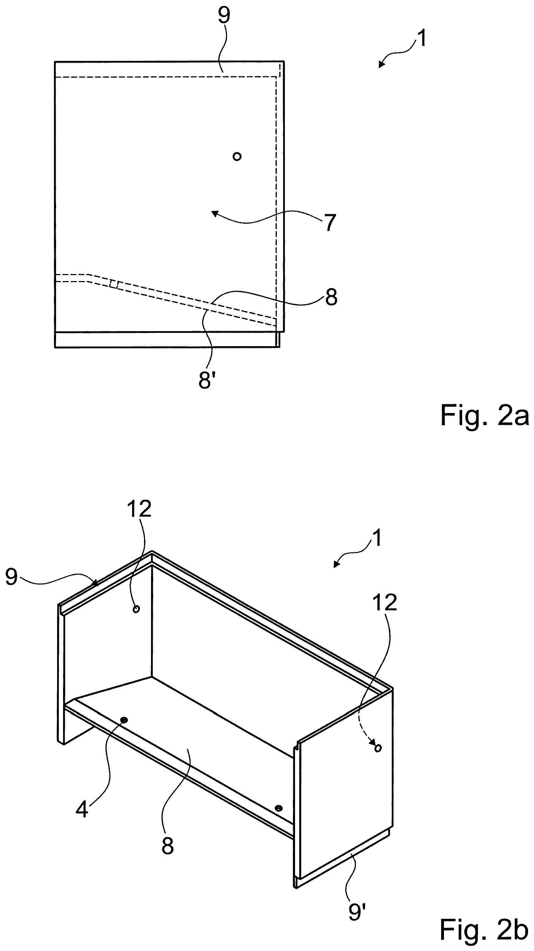

Das in der Figur 1 beispielhafte stapelbare Grundelement 1 gemäss der vorliegenden Erfindung wird in der Figur 2a gesondert gezeigt. Die Figur 2a zeigt einen Profilquerschnitt durch ein stapelbares Grundelement 1. Der im Wesentlichen rechteckige Kasten hat einen über einen wesentlichen Teil seiner Bodenfläche abgeschrägten Boden mit einer oberen Bodenfläche 8 und einer unteren Bodenfläche 8'. Die untere Bodenfläche 8' würde bei einem gestapelten Grundelement 1 in Fluidverbindung stehen mit dem nächst unteren Leervolumen. Das stapelbare Grundelement 1 definiert ein Leervolumen 7, ist gegen oben offen und hat an seiner oberen Kante eine Nut, welche einen entsprechenden Flansch eines analogen stapelbaren Grundelements aufnehmen kann.

In der Figur 2b ist dieses stapelbare Grundelement 1 nochmals perspektivisch dargestellt. Die Nut 9 erstreckt sich entlang der gesamten oberen Kante des stapelbaren Grundelements. An den schmalen Seitenwänden des stapelbaren Grundelements 1 sind Stifte 12 angebracht, welche dazu dienen, ein entsprechendes Einsatzgefäss in Selbstsperrung aufzunehmen. Der abgeschrägte Boden 8 ist mit Perforationen 4 versehen. Die untere Kante 9' ist so ausgebildet, dass sie das entsprechende Gegenstück der oberen Kante 9 bildet.

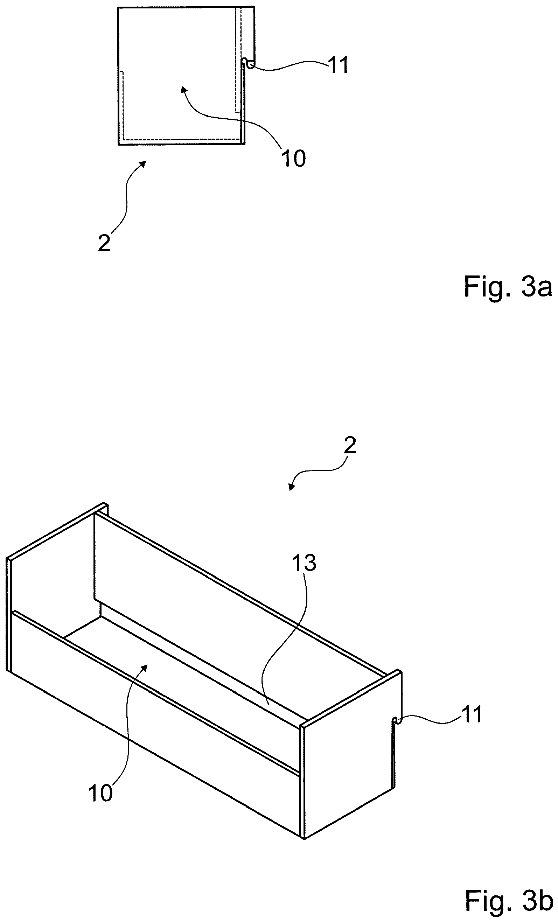

Ein erfindungsgemässes Einsatzgefäss ist schematisch im Profilquerschnitt in der Figur 3a gezeigt. Das durch das Einsatzgefäss 2 definierte Pflanzvolumen 10 dient zur Aufnahme des Substrats und der Pflanze (in dieser Figur nicht gezeigt). Auf einer Seite der Einsatzgefässe sind Haken 11 ausgebildet, welche dazu dienen, mit entsprechenden Stiften des stapelbaren Grundelements verrastet zu werden.

Die Figur 3b zeigt ein erfindungsgemässes Einsatzgefäss 2 in perspektivischer Ansicht. Die Ansicht entspricht einer Ansicht von der Vorderseite des Einsatzgefässes 2. Somit erkennt man die an der Rückseite unten verlaufende Ausnehmung 13. Ebenfalls erkenntlich sind die Haken 11 sowie das Pflanzvolumen 10.

Mit der erfindungsgemässen Vorrichtung wird ein System zur Begrünung vertikaler Flächen bereitgestellt, welches vielseitig und modular einsetzbar ist, sowie leicht zu bedienen. Die Grössen der entsprechenden stapelbaren Grundelemente und Einsatzgefässe können so gewählt werden, dass das gewünschte Pflanzziel erreicht wird. Entscheidend für die Grösse der einzelnen Bauteile ist letztlich die gewünschte Topfgrösse für das erforderliche Erdvolumen, die Stabilität und letztlich die zu begrünende Fläche selbst.

Mit dem erfindungsgemässen System lässt sich das Gewicht der gesamten bepflanzten Anlage über die Kanten gleichmässig verteilen. Die erfindungsgemässe Vorrichtung ist somit stabil und sicher zu betreiben. Sie kann sowohl freistehend als auch an eine Mauer oder Fassade gelehnt oder verschraubt platziert werden. Ebenfalls möglich ist es, zwei erfindungsgemässe Vorrichtungen Rücken an Rücken so zu platzieren, dass eine insgesamt begrünte Wand gebildet werden kann.

Durch die Wasserreservoirs und die Wahl eines entsprechenden Bewässerungsmittels ist die begrünte Fläche zudem wartungsarm. Für dennoch stattfindende Wartungsarbeiten ist die leichte Entnehmbarkeit und Wiedereinsetzbarkeit der Einsatzgefässe von besonderem Vorteil. Ein weiterer Vorteil der modularen Ausgestaltung ermöglicht es bei einer fest installierten Vorrichtung in regelmässigen Abständen lediglich die Einsatzgefässe auszutauschen, während die stapelbaren Grundelemente fest montiert werden. Dadurch lässt sich eine Bepflanzung einer Fassade in regelmässigen Abständen variieren. Denkbar wäre es unter anderem, entsprechende saisonale Bepflanzungen variabel zu ermöglichen. So könnten zum Beispiel Pflanzen zur Überwinterung mitsamt ihrer Einsatzgefässe in entsprechenden Gewächshäusern überwintert werden, während Einsatzgefässe mit winterharten Pflanzen eingesetzt werden und somit auch einen Grünschmuck trotz Wintertemperaturen ermöglichen.

Weitere Vorteile und Ausführungsformen ergeben sich für einen Fachmann aus der Gesamtheit der Patentansprüche.

## Patentansprüche

1. Vorrichtung zur Begrünung vertikaler Flächen, wobei die Vorrichtung eine Vorderseite und eine Rückseite aufweist, die Vorrichtung umfassend weiter
a) mindestens ein stapelbares Grundelement (1) mit einem Leervolumen (7) und mit einem von der Vorderseite zur Rückseite abschüssigen Boden (8);
b) mindestens ein Einsatzgefäss (2) mit einem Pflanzvolumen (10) zum Einsetzen in ein genanntes stapelbares Grundelement (1), wobei das Einsatzgefäss (2) mindestens eine Ausnehmung (13) aufweist, so dass das Pflanzvolumen (10) mit dem Leervolumen (7) in Fluidverbindung gebracht werden kann, wobei das mindestens eine Einsatzgefäss (2) und das mindestens eine stapelbare Grundelement (1) über Mittel (11, 12) verfügen, das Einsatzgefäss mit dem Grundelement zu verrasten, welche so ausgestaltet sind, dass das Einsatzgefäss (2) mit dem Grundelement (1) entfernbar verbindbar ist;
c) mindestens ein Bewässerungsmittel (5) aus einem Stoff, welcher so ausgestaltet ist, dass mittels Kapillareffekt Flüssigkeit vom Leervolumen (7) zum Pflanzvolumen (10) gelangen kann, insbesondere aus einem Stoff ausgewählt aus der Gruppe gebildet aus: Vlies, Wolle, anorganische Faser (z.B. Mineralwolle, Asbest), organische Faser (z.B. Viskose, Polyester), pflanzliche Naturfaser (z.B. Kokosfaser, Palmfaser, Hanffaser, Baumwolle, Bast, Sisal etc.), Keramik, Faserverbundwerkstoff enthaltend einen oder mehr dieser Stoffe, Verbund aus einer Mehrzahl dieser Stoffe, und
**dadurch gekennzeichnet, dass**
das Bewässerungsmittel (5) sich sackförmig im Einsatzgefäss (2) erstreckt, so dass es das Pflanzvolumen (10) im Einsatzgefäss (2) im Wesentlichen umgibt und wobei das Bewässerungsmittel (5) sich vom Einsatzgefäss (2) durch mindestens eine der mindestens einen Ausnehmung (13) in das Leervolumen (7), insbesondere in ein Wasserreservoir (3), erstreckt,.

2. Vorrichtung gemäss Anspruch 1, wobei das mindestens eine stapelbare Grundelement (1) das Wasserreservoir (3) im Bereich des von der Vorderseite zur Rückseite abschüssigen Bodens (8) innerhalb des Leervolumens (7) aufweist.

3. Vorrichtung gemäss Anspruch 2, wobei das Wasserreservoir (3) durch einen Überlauf (4) begrenzt wird, insbesondere durch einen Überlauf (4) an der Vorderseite des von der Vorderseite zur Rückseite abschüssigen Bodens (8).

4. Vorrichtung gemäss einem der Ansprüche 1 bis 3, wobei das mindestens eine Einsatzgefäss (2) über Haken (11) als Mittel das Einsatzgefäss mit dem Grundelement zu verrasten verfügt, und wobei das mindestens eine stapelbares Grundelement entsprechende Stifte (12) aufweist, die mit besagten Haken (11) verhakt werden können, insbesondere so, dass zwischen stapelbarem Grundelement (1) und Einsatzgefäss (2) eine Selbstsperrung entstehen kann, welche durch Zugentlastung lösbar ist.

5. Vorrichtung gemäss einem der Ansprüche 1 bis 4, wobei die Einsatzgefässe (2) und die Mittel (11, 12) zum Verrasten derselben mit den Grundelementen (2) so angeordnet sind, dass die Einsatzgefässe (2) durch die Vorderseite der Vorrichtung entnehmbar und verrastbar sind.

6. Vorrichtung gemäss einem der Ansprüche 1 bis 5, weiter umfassend eine Pumpe zur Bewässerung der Vorrichtung.

7. Verfahren zur Begrünung einer vertikale Fläche, umfassend die folgenden Schritte:
a) bereitstellen einer oder mehrerer Vorrichtungen gemäss Anspruch 1;
b) aufstellen der einen oder mehreren Vorrichtung gemäss Anspruch 1 an der zu begrünenden vertikalen Fläche, dergestalt dass die Vorderseite von der zu begrünenden vertikalen Fläche abgewandt ist;
c) bepflanzen eines oder mehrerer Einsatzgefässe (2) und einrasten derselben in ein oder mehrere Grundelemente (1).

8. Verwendung einer Vorrichtung gemäss Anspruch 1 zur Begrünung einer vertikalen Fläche, wobei eine Mehrzahl von stapelbaren Grundelementen (1) an der zu begrünenden vertikalen Fläche übereinander gestapelt werden und eine Mehrzahl von Einsatzgefässen (2) mit Pflanzen bepflanzt und dergestalt in die stapelbaren Grundelemente (1) eingeführt werden, dass sie mit dem Grundelement (1) lösbar verrasten.

## Claims

1. A device for greening vertical surfaces, wherein the device has a front side and a back side, the device further comprising
a) at least one stackable base element (1) with an empty volume (7) and with a bottom (8) sloping from the front side to the back side;
b) at least one insert container (2) with a plant volume (10) for insertion into a mentioned stackable base element (1), wherein the insert container (2) has at least one recess (13), so that the plant volume (10) can be put in fluid connection with the empty volume (7), wherein the at least one insert container (2) and the at least one stackable base element (1) have means (11, 12) for engaging the insert container with the base element which are designed so that the insert container (2) can be connected to the base element (1) in a detachable manner ;
c) at least one watering means (5) made of a substance designed so that, by capillary action, fluid can reach the plant volume (10) from the empty volume (7), wherein the substance is selected in particular from the group consisting of: nonwoven material, wool, inorganic fibres (for example, mineral wool, asbestos), organic fibres (for example, viscose, polyester), plant-based natural fibres (for example, coconut fibre, palm fibre, hemp fibre, cotton, bast, sisal, etc.), ceramics, fibre composite containing one or more of these substances, a composite of a plurality of these substances, and
**characterised in that**
the watering means (5) extends in the shape of a sack in the insert container (2), so that it substantially encloses the plant volume (10) in the insert container (2), and wherein the watering means (5) extends from the insert container (2) through at least one of the at least one recess (13) into the empty volume (7), in particular into a water reservoir (3).

2. The device according to Claim 1, wherein the at least one stackable base element (1) comprises the water reservoir (3) in the area of the bottom (8) sloping from the front side to the back side within the empty volume (7).

3. The device according to Claim 2, wherein the water reservoir (3) is delimited by an overflow device (4), in particular by an overflow device (4) on the front side of the bottom (8) sloping from the front side to the back side.

4. The device according to any one of Claims 1 to 3, wherein the at least one insert container (2) has hooks (11) as means for engaging the insert container with the base element, and wherein the at least one stackable base element comprises corresponding pins (12) which can be hooked with said hooks (11), in particular so that, between stackable base element (1) and insert container (2), a self locking effect can be achieved, which can be released by strain relief.

5. The device according to any one of Claims 1 to 4, wherein the insert container (2) and the means (11, 12) for the engagement of same with the base elements (2) are arranged in such a manner that the insert container (2) can be removed and engaged by the front side of the device.

6. The device according to any one of Claims 1 to 5, further comprising a pump for watering the device.

7. A method for greening a vertical surface, comprising the following steps:
a) providing one or more devices according to Claim 1;
b) setting up the one or more devices according to Claim 1 on the vertical surface to be greened, in such a manner that the front side faces away from the vertical surface to be greened;
c) planting in one or more insert containers (2) and engaging same in one or more base elements (1).

8. A use of a device according to Claim 1 for greening a vertical surface, wherein a plurality of stackable base elements (1) are stacked on top of one another on the vertical surface to be greened, and a plurality of insert containers (2) are planted with plants and are introduced into the stackable base elements (1) in such a manner that they engage detachably with the base element (1).

## Revendications

1. Dispositif d'enherbement des surfaces verticales, le dispositif présentant une face avant et une face arrière, le dispositif comportant en outre
a) au moins un élément de base empilable (1) avec un volume vide (7) et un fond (8) pentu de la face avant vers la face arrière ;
b) au moins un récipient d'insertion (2) avec un volume de plantation (10) à insérer dans ledit élément de base empilable (1), le récipient d'insertion (2) présentant au moins un évidement (13) de sorte que le volume de plantation (10) peut être mis en communication fluidique avec le volume vide (7), ledit au moins un récipient d'insertion (2) et ledit au moins un élément de base empilable (1) disposant de moyens (11, 12) pour enclencher le récipient d'insertion dans l'élément de base qui sont conçus de telle sorte que le récipient d'insertion (2) peut être relié de façon amovible à l'élément de base (1) ;
c) au moins un moyen d'arrosage (5) composé d'une matière qui est conçue de sorte que du liquide peut passer du volume vide (7) au volume de plantation (10) par effet capillaire, particulièrement composé d'une matière sélectionnée dans le groupe constitué de : non tissé, laine, fibres inorganiques (p.ex. laine minérale, amiante), fibres organiques (p.ex. viscose, polyester), fibres naturelles végétales (p.ex. fibre de coco, fibre de palmier, fibre de chanvre, coton, raphia, sisal etc.), céramique, composite en fibres comprenant une ou plusieurs de ces matières, composite d'une pluralité de ces matières, et
**caractérisé en ce que**
le moyen d'arrosage (5) s'étend sous forme d'un sac dans le récipient d'insertion (2) de sorte qu'il entoure sensiblement le volume de plantation (10) dans le récipient d'insertion (2), et le moyen d'arrosage (5) s'étendant du récipient d'insertion (2) par au moins un dudit au moins un évidement (13) dans le volume vide (7), en particulier dans un réservoir d'eau (3).

2. Dispositif selon la revendication 1, ledit au moins un élément de base empilable (1) comportant le réservoir d'eau (3) dans la région du fond pentu (8) de la face avant vers la face arrière à l'intérieur du volume vide (7).

3. Dispositif selon la revendication 2, le réservoir d'eau (3) étant limité par un trop-plein (4), notamment par un trop-plein (4) sur la face avant du fond (8) pentu de la face avant vers la face arrière.

4. Dispositif selon l'une quelconque des revendications 1 à 3, ledit au moins un récipient d'insertion (2) disposant de crochets (11) en tant que moyen pour enclencher le récipient d'insertion dans l'élément de base, et ledit au moins un élément de base empilable présentant des goupilles (12) correspondantes pouvant être accrochées avec lesdits crochets (11), notamment de telle sorte à générer un blocage automatique entre l'élément de base empilable (1) et le récipient d'insertion (2) qui est déblocable par décharge de traction.

5. Dispositif selon l'une quelconque des revendications 1 à 4, les récipients d'insertion (2) et les moyens (11, 12) étant agencés pour s'enclencher avec les éléments de base (2) de telle sorte que les récipients d'insertion (2) peuvent être retirés et enclenchés par la face avant du dispositif.

6. Dispositif selon l'une quelconque des revendications 1 à 5, comportant en outre une pompe pour arroser le dispositif.

7. Procédé d'enherbement d'une surface verticale, comportant les étapes suivantes :
a) Mise à disposition d'un ou de plusieurs dispositifs selon la revendication 1 ;
b) Installation d'un ou de plusieurs dispositifs selon la revendication 1 sur la surface verticale à enherber, de sorte que la face avant est opposée à la surface verticale à enherber;
c) Plantation d'un ou de plusieurs récipients d'insertion (2) et enclenchement de ceux-ci dans un ou plusieurs éléments de base (1).

8. Utilisation d'un dispositif selon la revendication 1 pour l'enherbement d'une surface verticale, une pluralité d'éléments de base empilables (1) étant empilés verticalement les uns au-dessus des autres sur la surface verticale à enherber et une pluralité de récipients d'insertion (2) étant plantés de plantes et insérés dans les éléments de base empilables (1) de sorte qu'ils sont enclenchés de manière amovible dans l'élément de base (1).
